# DEMANDE DE BREVET EUROPEEN

(11) **EP 3 050 830 A1**
(43) Date de publication de la demande: **03.08.2016**
(21) Numéro de dépôt: 15003565.7
(22) Date de dépôt: 15.12.2015
(51) Int. Cl.: B65G 47/31, B65G 47/68

(54) **PROCEDE DE TRANSFERT DE COLIS ET DISPOSITIF CORRESPONDANT**

(30) Priorité: 15.12.2014 FR 1462448
(71) Demandeur: SYLEPS société anonyme à directoire et conseil de surveillance, 56100 Lorient (FR)
(72) Inventeur: LE TURNIER, Philippe, 56700 Branderion (FR); LE DU, Pierre, 29300 Redene (FR)
(74) Mandataire: Benech, Frédéric

(57) **Abrégé**

Procédé et dispositif de transfert et de présentation en file longitudinale de colis à un poste de reprise, dans lequel on dépose les colis par couche, chaque couche comprenant au moins un rang de colis transversal au sens de transfert, sur un premier ensemble convoyeur (9) de réception véhiculant les colis ensemble dans une première direction (10); on fait avancer ensuite ces colis sans rupture de charge sur un deuxième ensemble convoyeur (11) pour transfert selon une deuxième direction (12) formant un angle avec la première direction, de sorte que la différence de longueur de trajet des colis initialement situés dans le sens transversal de la première direction (9) permet l'égrainage des colis en file longitudinale ou sensiblement longitudinale.

## Description

La présente invention concerne un procédé de transfert et de présentation en file indienne, de colis à un poste de reprise.

Elle concerne également un dispositif de transfert de colis mettant en oeuvre un tel procédé.

Elle trouve une application particulièrement importante bien que non exclusive dans le domaine de l'égrainage de charges de formes diverses, c'est à dire du transfert et de la séparation entre elles de charges à partir d'une couche de colis en nombre variable, en une file de colis isolés, alignés et orientés. Elle s'applique notamment et en particulier au cas de charges non nécessairement parallélépipédiques, présentant des centres de gravité élevés et/ou des fonds non plats entrainant de ce fait une instabilité des colis lors de leur transfert.

On connaît déjà des systèmes de transfert et de présentation en file longitudinale de colis. Ceux-ci mettent en oeuvre des pinces de préhension qui viennent placer les colis successivement sur un tapis de transfert par exemple, et/ou utilisent des vérins pousseurs qui viennent recadrer les colis en file indienne au fur et à mesure de leur avancée sur un tapis.

De tels systèmes présentent des inconvénients. Ils nécessitent en effet des actionneurs (pinces, vérins pousseurs,...) coûteux, susceptibles de tomber en panne et entrainant un encombrement notamment dans le sens latéral des systèmes.

On connait également (WO 2014/17029 A ; US 2001/0030102) des méthodes de tri et d'organisation de files de colis mettant en oeuvre des tapis de vitesses différentes et/ou de hauteur et/ou d'orientation différentes. De tels systèmes ne prennent pas en compte tous les types de colis et notamment les colis présentant des centres de gravité élevé risquant de basculer lors du transport.

La présente invention vise notamment à pallier ces inconvénients en proposant un procédé et un dispositif répondant mieux que ceux antérieurement connus aux exigences de la pratique, notamment en ce qu'elle permet un tri et une présentation de colis optimisés, de façon simple, efficace, sans risque d'erreur et/ou d'embouteillage intempestifs et ce pour un coût particulièrement avantageux, et ce même en présence de colis instables.

Avec l'invention le nombre d'actionneurs est plus limité, ce qui diminue les risques de panne, les coûts de maintenance et simplifie donc le fonctionnement de l'ensemble.

Grâce à l'invention l'alimentation en colis peut de plus être effectuée par un système de dépalettisation peu sophistiqué avec des débits importants (non tributaires d'un diagramme de temps trop long dû aux actionneurs).

La présente invention part notamment d'une idée différente, consistant à faire s'égrainer les colis naturellement par le biais de dispositions particulières des tapis ou convoyeurs sur lesquels reposent et se déplacent les colis à transférer.

Dans ce but l'invention propose notamment un procédé de transfert et de présentation en file longitudinale ou sensiblement longitudinale dans le sens de leur transfert, de colis à un poste de reprise, procédé dans lequel on dépose les colis par couche horizontale, chaque couche comprenant au moins un rang de colis transversal au sens de transfert, sur un premier ensemble convoyeur véhiculant les colis dans une première direction ou sensiblement dans une première direction, caractérisé en ce que on fait avancer ensuite ces colis sans rupture de charge sur un deuxième ensemble convoyeur pour transfert selon une deuxième direction formant un angle avec la première direction, de sorte que la différence de longueur de trajet des colis initialement situés dans le sens transversal de la première direction permet l'égrainage des colis en file longitudinale ou sensiblement longitudinale.

Par file sensiblement longitudinale on entend une file longitudinale alignée à ± 5°.

Par sans rupture de charge on entend un déplacement continu des colis d'un tapis ou convoyeur à l'autre, sans reprise par des moyens élévateurs et/ou entrainant un décrochement brusque vertical en hauteur.

Avantageusement les premier et deuxième ensembles convoyeurs assurent le transfert dans un même plan horizontal.

Egalement avantageusement le deuxième ensemble comporte une barre oblique par rapport à la deuxième direction fixe, mais réglable en rotation au tour d'un axe solidaire du bord externe dudit deuxième ensemble, du côté de la sortie du premier ensemble.

Cette barre ramène vers l'intérieur du deuxième ensemble, le ou les colis situé(s) le plus vers l'extérieur.

Le flux de colis égrainé est ainsi optimisé de façon inattendue.

Dans des modes de réalisation avantageux, on a par ailleurs et/ou de plus recours à l'une et/ou à l'autre des dispositions suivantes :
- l'angle est compris entre 30° et 150° ;
- l'angle est inférieur à 90° ;
- l'angle est supérieur ou égal à 90° ;
- le premier ensemble convoyeur comprend au moins une partie agencée pour transférer les colis séparément dans des premières directions divergentes, chaque direction correspondant à chaque colis ou à un nombre déterminé de colis, et/ou à des premières vitesses différentes ;
- la première et/ou la deuxième directions sont invariables (trajectoires de colis rectilignes) ;
- la première et/ou la deuxième directions sont au moins en partie variables (trajectoires de colis au moins en partie courbes) ;
- la couche comprenant au moins deux rangs, on fait avancer les colis à partir d'une première partie du premier ensemble convoyeur animée d'une première vitesse V, sur une deuxième partie intermédiaire située avant le deuxième ensemble convoyeur, ladite deuxième partie intermédiaire étant animée d'une deuxième vitesse déterminée V', supérieure à ladite première vitesse, de sorte que la différence de vitesses entraine la séparation des rangs successifs entre eux avant le transfert sur le deuxième ensemble convoyeur ;
- on fait avancer le deuxième rang sur le deuxième ensemble convoyeur que lorsque l'ensemble des colis du rang précédent a atteint une certaine distance par rapport à l'entrée sur ledit deuxième ensemble convoyeur, pour éviter tout risque de télescopage entre colis de deux rangs différents ;
- on fait avancer les colis sur au moins un troisième ensemble convoyeur de transfert (par exemple dans un plan horizontal) dans au moins une troisième direction formant un deuxième angle avec la deuxième direction du deuxième ensemble convoyeur. Avantageusement on fait avancer les colis sur un énième tapis formant un énième angle avec la direction du tapis précédent, avec n > 3 par exemple égal à cinq. Avantageusement les trajets forment des angles dont l'orientation est toujours la même (soit horaire soit antihoraire) ;
- le premier angle et le deuxième angle sont égaux à 90° ;
- on redresse chaque colis par rapport à un plan horizontal déterminé dans une position identique de préhension par au moins une rampe de guidage motorisée, en biais par rapport au sens de transfert et on actionne un système de pivotement si nécessaire, pour placer les colis toujours dans le même sens par rapport à leur axe longitudinal.

Avantageusement il est prévu au moins deux rampes de guidage.

L'invention propose également un dispositif mettant en oeuvre le procédé tel que décrit ci-dessus.

Elle propose aussi un dispositif de transfert et de présentation de colis en file longitudinale ou sensiblement longitudinale dans le sens de leur transfert à un poste de reprise des colis, dispositif dans lequel on dépose les colis par couche, chaque couche comprenant au moins un rang transversal au sens de transfert, ledit dispositif comprenant un premier ensemble convoyeur de réception véhiculant les colis dans une première direction ou sensiblement dans une première direction, caractérisé en ce que il comprend un deuxième ensemble convoyeur pour transfert des colis sans rupture de charge, selon une deuxième direction formant un angle avec la première direction, de sorte que la différence de longueur de trajet des colis initialement situés dans le sens transversal de la première direction permet l'égrainage des colis en file longitudinale ou sensiblement longitudinale du fait de cet angle.

Avantageusement l'angle est compris entre 30° et 150°.

Egalement avantageusement l'angle est inférieur à 90°.

Dans un mode de réalisation avantageux le premier ensemble convoyeur comprend au moins une partie intermédiaire agencée pour transférer les colis séparément dans des premières directions divergentes, chacune correspondante à un ou plusieurs colis, et/ou à des premières vitesses différentes.

Avantageusement la et/ou les premières directions sont invariables (trajectoires rectilignes) et/ou au moins en partie variables, par exemple continument (trajectoires au moins en partie courbes).

Dans un mode de réalisation avantageux la couche comprenant au moins deux rangs, le premier ensemble convoyeur comprend une deuxième partie intermédiaire située avant le deuxième ensemble convoyeur, ladite deuxième partie intermédiaire étant agencée pour être animée d'une vitesse déterminée supérieure à la ou aux vitesses d'une première partie du premier ensemble convoyeur, de sorte que la différence de vitesses entraine la séparation des rangs successifs entre eux avant le transfert sur le deuxième ensemble convoyeur.

Avantageusement le dispositif comprend un troisième ensemble convoyeur de transfert selon ledit plan horizontal déterminé, dans une troisième direction ou sensiblement dans une troisième direction formant un deuxième angle avec la deuxième direction du deuxième ensemble convoyeur.

Dans un mode de réalisation avantageux il comprend au moins une ou au moins deux rampes motorisées en biais par rapport au sens de transfert, de guidage des colis, et des moyens d'actionnement d'un système de pivotement pour placer les colis toujours dans le même sens par rapport à leur axe horizontal.

L'invention sera mieux comprise à la lecture de modes de réalisation donnés ci-après à titre d'exemples non limitatifs. La présente invention se réfère aux dessins qui l'accompagnent dans lesquels :
La figure 1 est une vue en perspective axionométrique d'un dispositif selon un mode de réalisation selon l'invention.
La figure 2 est une vue de dessus de la figure 1.
Les figures 3A et 3B montrent respectivement de profil et en perspective partielle une première zone du premier ensemble convoyeur selon le mode de réalisation de la figure 1.
La figure 4 est une vue en perspective en partie éclatée de la deuxième partie intermédiaire utilisée dans le dispositif de la figure 1.
La figure 5 montre un exemple de rampe de guidage (en biais) utilisable dans un mode de réalisation de l'invention comme par exemple celui de la figure 1.
Les figures 6A et 6B illustrent trois types d'angles entre ensembles convoyeurs selon des modes de réalisation de l'invention.
Les figures 7A à 7C donnent en perspective trois étapes de transfert de colis montrant leur alignement progressif selon un mode de réalisation de l'invention.

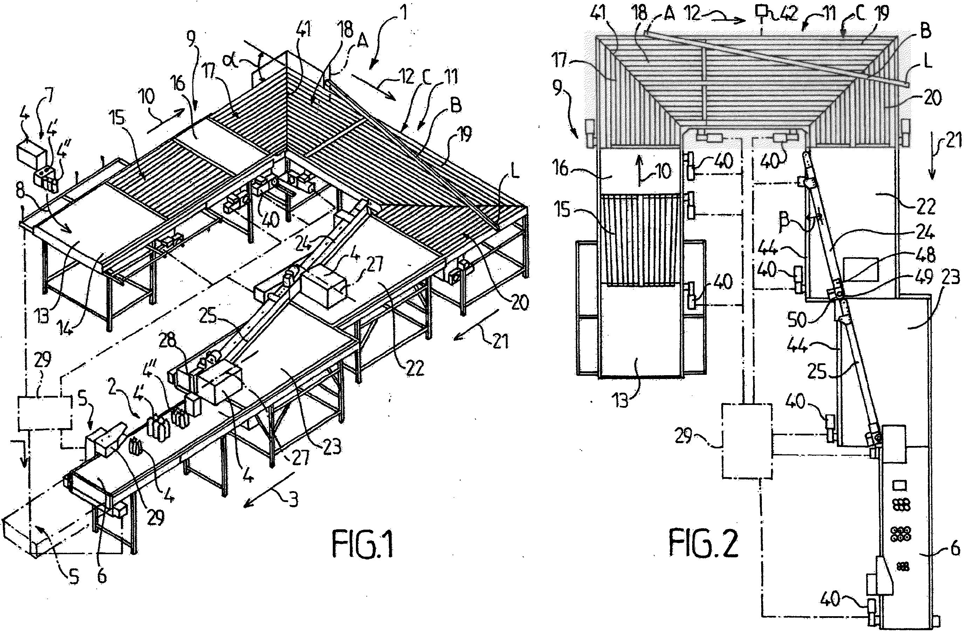

La figure 1 montre un dispositif 1 mettant un oeuvre un procédé de transfert et de présentation en file indienne 2, c'est à dire longitudinale ou sensiblement longitudinale dans le sens 3 de leur transfert, de colis 4, 4', 4" à un poste de reprise 5 par exemple constitué par une table 6 convoyeuse qui va permettre ensuite la reprise des colis de façon connue en elle-même par l'intermédiaire par exemple de pinces et/ou tout autre moyen approprié.

Les colis 4, 4', 4" sont amenés par couche 7 horizontale de façon connue en elle-même (flèche 8) sur un premier ensemble convoyeur 9 véhiculant les colis dans une première direction ou sensiblement dans une première direction (flèche 10) sur un deuxième convoyeur 11 pour transfert desdits colis selon une deuxième direction 12 formant un angle α avec la première direction 10 de sorte que, comme on le verra plus précisément en référence aux figures suivantes, la différence de longueur de trajets des colis initialement situés dans le sens transversal de la première direction permet l'égrainage du colis en file longitudinale ou sensiblement longitudinale.

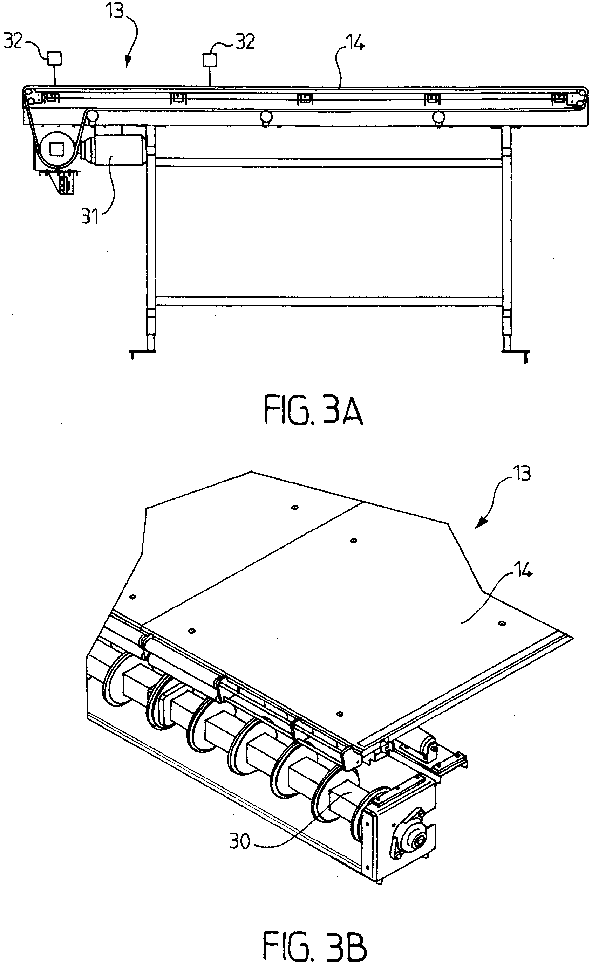

Dans le mode de réalisation plus particulièrement décrit ici le premier ensemble 9 comprend une table 13 de réception formée par un tapis 14 qui sera décrit plus précisément en référence aux figures 3A et 3B.

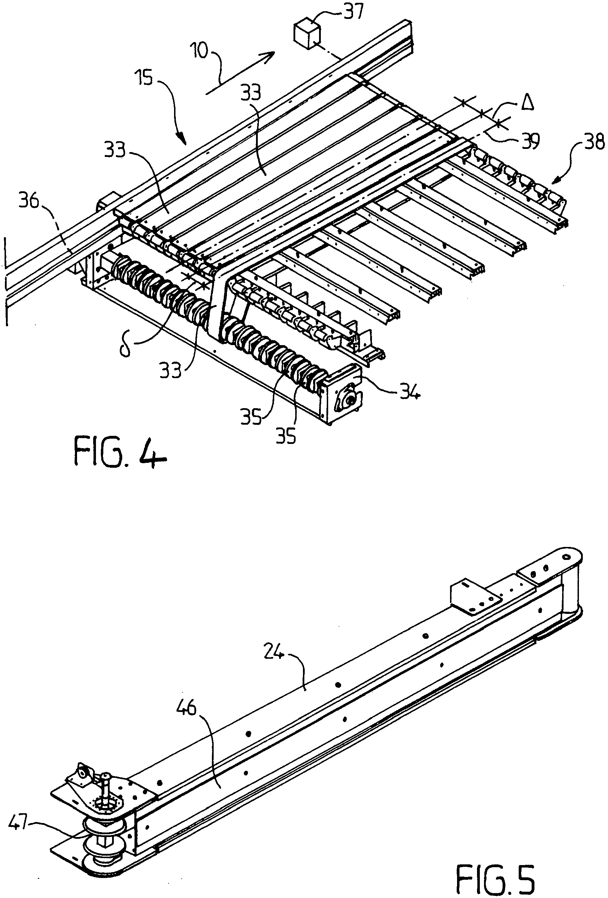

Le premier ensemble 9 comprend de plus au moins une partie 15 agencée pour faire avancer les colis dans des premières directions divergentes comme cela va être plus précisément décrit en référence à la figure 4.

Cette partie peut également être agencée pour faire avancer les colis à des vitesses différentes par l'intermédiaire de bandes elles-mêmes de vitesses différentes.

Le premier ensemble 9 comprend également situé après la partie 15 une deuxième partie 16, intermédiaire située avant le deuxième ensemble convoyeur 11, ladite deuxième partie 16 étant animée d'une vitesse V' supérieure à la vitesse V des parties en amont du premier ensemble, de sorte que la différence de vitesses entraine la séparation de rangs successifs avant l'arrivée sur le deuxième ensemble convoyeur 11.

Dans le mode de réalisation de la figure 1 on a également prévu une troisième partie (d'angle) 17 du premier ensemble convoyeur 9 qui est celle qui va être en contact sans transfert de charge avec le deuxième ensemble convoyeur 11 formant l'angle α ici de 90° avec la direction 10 du premier ensemble 9.

Celui-ci est constitué de bandes parallèles de largeur et de constitution identiques continues, en noria autour d'un engrenage rotatif et de longueur progressive de l'intérieur vers l'extérieur.

Dans le mode de réalisation ici décrit le deuxième ensemble convoyeur 11 comprend quant à lui une première partie d'angle 18, puis un tapis par exemple constitué de plusieurs bandes 19 centrales qui va lui-même être en contact avec un troisième ensemble convoyeur 20 transférant les colis dans une troisième direction 21, formant un deuxième angle α, ici également de 90° avec la direction 12.

Le troisième ensemble convoyeur 20 comporte de plus une série de deux tapis convoyeurs situés en aval et véhiculant les colis dans la même direction 21, à savoir un premier tapis rectangulaire 22 et un deuxième tapis rectangulaire 23, par exemple identique au premier.

Chacun de ces tapis par exemple constitué de bandes parallèles fonctionnant de la même façon que le tapis 14, mais de dimensions différentes, comporte en partie latérale une rampe de guidage 24, 25, qui permet de guider les colis.

Ces rampes sont par exemple motorisées comme il sera décrit en référence à la figure 5.

A la sortie du dernier tapis 23, les colis sont maintenant disposés en file indienne sur la table 6, de réception et d'évacuation vers le poste 5 de reprise des colis.

Plus précisément la table 6 comporte à son extrémité un système 26 propre à faire pivoter la charge ou le colis 4 (si nécessaire) pour le placer toujours dans le même sens par rapport à son axe longitudinal 27.

Le système 26 de pivotement est par exemple constitué par une butée amovible, qui vient se mettre en place lorsque les mesures effectuées par un capteur optique 28 le permettent. Le capteur va déterminer, en fonction d'une programmation préalable qui sera détaillée ci-après, s'il y a lieu d'effectuer un pivotement grâce à des moyens 29 de commande de l'ensemble connus en eux-mêmes (automate).

On va maintenant décrire plus précisément la table 13 en référence aux figures 3A et 3B.

L'alimentation du dispositif comme indiqué ci-avant est ici réalisée par un système de dépalettisation chargé de déposer la couche 7 de colis 4, 4', 4"... (issue d'une palette) sur le tapis 14 de réception.

La couche 7 peut être complète ou incomplète, ses dimensions hors tout s'inscrivant par exemple dans une surface définie par les standards actuellement rencontrés en logistique, à savoir 1 200 x 800 mm² ou 1 200 x 1 000 mm².

Elle est constituée d'au moins un rang de colis 4, 4', 4"... pouvant présenter des orientations différentes.

Cette variation d'orientation peut être observée entre rangs consécutifs ou à l'intérieur d'un même rang.

Un ou plusieurs rangs peuvent être aussi imbriqués les uns dans les autres, ceci ayant été réalisé au départ afin optimiser les plans de rangement, en minimisant les volumes perdus et/ou en croisant les couches afin d'améliorer la stabilité de la palette.

La table (ou convoyeur) de réception 13 est réalisée à partir d'une bande 14 en forme de chaîne sans fin composée de maillons de plastique de façon connue en elle-même.

Les dimensions de cette table sont supérieures à celles de la couche réceptionnée, la bande 14 étant sans fin et engrenée en noria sur un arbre 30 (cf. figure 3B) entrainé par un motoréducteur 31, de façon connue en elle-même. Elle permet un transfert des charges à une vitesse, par exemple de l'ordre de 5m/mn.

Un dispositif optique par exemple composé de quatre capteurs photoélectriques 32, assure le balisage de la zone, renseignant ainsi le système d'alimentation de l'automate 29 de l'état d'occupation de la table 14.

En référence à la figure 4, on a ensuite représenté une partie 15 du premier ensemble convoyeur 9, dite partie intermédiaire qui permet de mieux singulariser les colis.

Elle est par exemple réalisée à partir de treize bandes modulaires 33, de conception similaire à la bande 14 précédente mais plus fines. Ici encore ces bandes sont montées sur un (même) arbre 34, équipé de pignons 35, entrainé par un (seul) motoréducteur 36.

Dans ce mode de réalisation la distance transversale initiale δ entre l'axe longitudinal de chacune des bandes, augmente progressivement sur l'ensemble de la course pour aboutir à une distance Δ en bout de course comme représenté sur la figure 4 (avec par exemple Δ - δ = 100 mm ou 96 mm).

Seule la bande centrale est implantée axialement dans le sens de déplacement et strictement parallèle à la direction 10.

Les douze autres bandes implantées symétriquement de part et d'autre (six de chaque côté) de la bande centrale, présentent donc par rapport à l'axe de déplacement une direction de plus en plus divergente.

Une telle disposition assure une singularisation des charges selon deux axes.

Une première séparation selon l'axe 10 de déplacement des charges 10 est réalisée grâce au différentiel de vitesse appliqué entre le convoyeur d'entrée et le présent convoyeur.

Par exemple ce différentiel peut ici être de l'ordre de 2 et provoque naturellement l'apparition d'une distance ou jeu longitudinal entre deux rangs consécutifs. Un capteur photoélectrique 37 placé en extrémité 38 de cette partie de convoyeur intermédiaire détecte alors l'espace entre deux colis.

Une seconde séparation selon l'axe normal au déplacement est due à la divergence que présente chacune des bandes entre elles.

Cette divergence provoque naturellement l'apparition d'une distance ou jeu transversal au déplacement entre chacune des charges d'un même rang (jusqu'à la valeur Δ - δ).

Dans le mode de réalisation de l'invention plus particulièrement décrit ici un convoyeur intermédiaire 16 (cf. figures 1 et 2) est par ailleurs prévu.

Ce convoyeur 16, par exemple d'une longueur sensiblement deux fois plus courtes que la longueur de la partie intermédiaire 15 du premier ensemble convoyeur (en amont), est réalisé à partir d'une bande modulaire de conception similaire ou identique aux bandes précédentes par exemple du type de celles de la partie de convoyeur 13 décrite ci-avant.

Un seul motoréducteur 40 du même type que les autres motoréducteurs entrainant les tapis et également prévu, agencé pour appliquer un différentiel de vitesse par exemple ici de l'ordre de 1,7 avec la partie 15 de convoyeur précédent.

La présence de ce rang ainsi que la détection de son transfert est réalisée par un capteur photoélectrique (non représenté) placé à l'extrémité du convoyeur de façon connue en elle-même.

Dans le cas où l'opération suivante ne serait pas terminée, l'automate est avantageusement programmé pour immobiliser le rang, de façon à ce que l'ensemble des colis du rang précédent soit suffisamment avancé (en fonction du nombre de colis, de leur forme, des vitesses et des angles entre direction etc...) de telle façon à éviter les télescopages.

Selon le mode de réalisation de l'invention plus particulièrement décrit ici le rang précédemment isolé est alors transféré sur le deuxième ensemble convoyeur 11.

Celui-ci comprend deux parties de convoyeur à savoir et tout d'abord une première partie 18 qui forme un angle de 90° avec la dernière partie 17 du premier ensemble convoyeur, ce qui permet une jonction en biseau 41 (cf. figure 1 et 2).

Cette jonction en biseau assure la continuité du transfert c'est à dire un transfert sans rupture de charge et matérialise ici la bissectrice de l'angle égal à 90°.

Il comprend ensuite une deuxième partie 19 de convoyeur de ce deuxième ensemble convoyeur 11, formée par des bandes parallèles du même type que celles décrites ci-avant et permet de déplacer les colis un peu plus loin vers un troisième ensemble convoyeur 20 qui sera décrit ci-après.

Dans l'exemple décrit plus précisément ici les deux parties de convoyeur 18 et 19 sont réalisées à partir de dix-sept bandes modulaires de conception similaire aux bandes précédentes, implantées parallèlement entre elles et guidées dans des rainures ménagées dans un support en matériau plastique.

L'ensemble de ces bandes est monté sur un même arbre entrainé par un motoréducteur, ici encore de façon connue en elle-même, assurant un déplacement des charges à par exemple une vitesse approximative comprise entre 15m/mn et 40m/mn, par exemple 24m/mn.

Chacune des charges d'un même rang se voit ainsi appliqué une vitesse linéaire identique

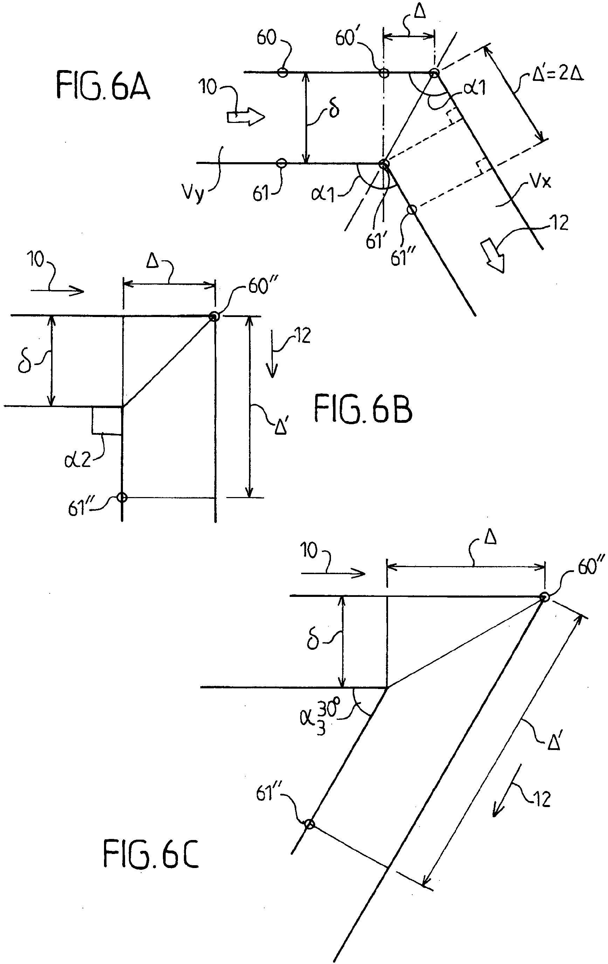

Lors du transfert à 90° entre la fin du premier ensemble convoyeur 17 et le début du deuxième ensemble convoyeur 18, le trajet à parcourir par chacune des charges est sensiblement variable comme cela sera précisé en référence aux figures 6A à 6C ci-après.

En effet si on cherche à caractériser la position de chacune des charges on peut retenir que plus la position initiale se retrouve rapprochée du sommet de l'angle, plus le trajet que devra parcourir la charge est important.

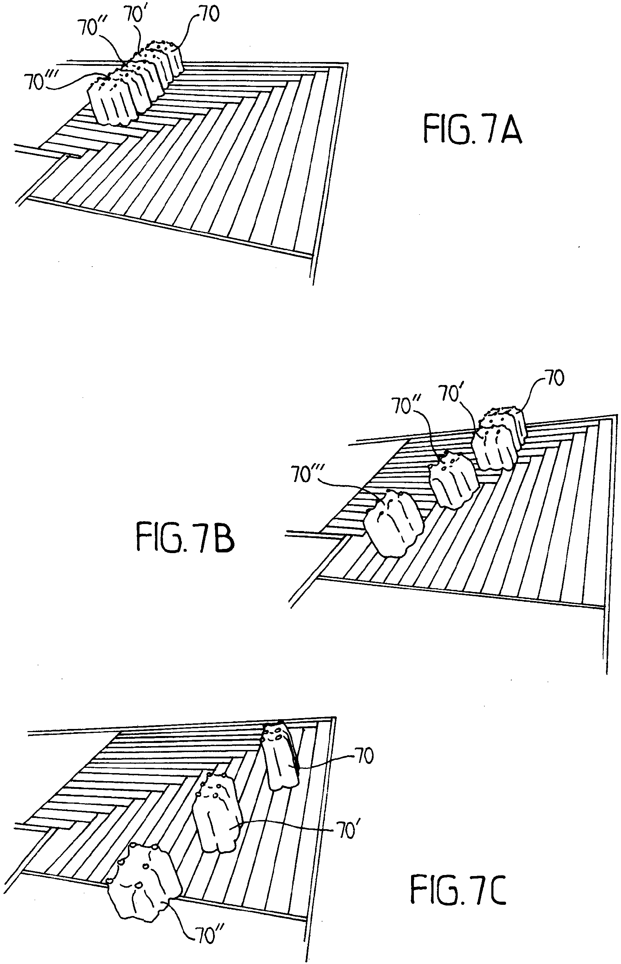

La vitesse linéaire appliquée à chacune des charges étant par hypothèse la même, on observe donc que chaque charge réalise son trajet dans un temps proportionnel à la distance à parcourir, créant ainsi à la fin du transfert un décalage en position entre chacune d'elles qui va entrainer leur alignement linéaire comme on le constate par exemple sur la figure 7.

Il n'existe alors plus qu'un seul rang (en cours de mise en file indienne) sur l'ensemble des convoyeurs.

La zone présentant une forme complexe, son balisage est réalisé par un capteur laser à balayage 42 (cf. figure 2) dont la couverture est adaptable.

Le second ensemble comprend de plus une barre B droite, s'étendant sur toute la longueur dudit deuxième ensemble, de guidage complémentaire des colis d'extrémité. La barre est fixée d'un côté sur le côté C extérieur du deuxième ensemble, à un axe A situé du côté du premier ensemble, autour duquel elle est réglable en rotation et comprend de l'autre côté une extrémité libre L.

L'extrémité libre L est donc réglable en position, la barre permettant de ramener les colis situés trop à l'extrémité ce qui permet de mieux gérer les flux de colis égrenés.

Dans le mode de réalisation des figures 1 et 2, un troisième ensemble convoyeur à 90° est donc implanté à la suite pour parfaire la mise en file.

Une partie d'angles, symétrique et identique à la partie d'angle 17 est prévue.

L'alignement des charges est quant à lui complété par deux convoyeurs 22, 23 (ou tapis) à bandes, par exemple identiques entre eux, présentant une longueur approximative par exemple de 2,50 m.

Chaque tapis de type similaire au tapis 14, est équipé d'un guide vertical 24, 25 motorisé, indépendant, présentant un angle aigu β par rapport à l'une des rives 44 du convoyeur, dont le choix du côté droit ou gauche déterminera le plan de référence de l'alignement.

Avantageusement l'angle β est réglable de façon manuelle ou motorisée de façon programmée en fonction des vitesses et des dimensions de colis à aligner à partir d'une palette initiale de stockage.

L'action des guides est maintenue sur la totalité de la longueur de chaque tapis 22, 23, ceux-ci étant placés l'un derrière l'autre.

Le second tapis 23 est décalé sur l'axe transversal au déplacement, de manière à assurer une continuité de l'action d'alignement sur une distance ici par exemple de 5 m.

Le premier convoyeur 22 prend en charge l'alignement des charges présentant des trajectoires les plus courtes, le second réalignant le cas échéant les autres charges.

En référence à la figure 5 le guide (24, 25) comprend une bande verticale sans fin 46 se déplaçant longitudinalement de façon connue en elle-même autour d'un axe 47 actionné par un motoréducteur (non représenté).

L'orientation des charges est ici réalisée par des convoyeurs en bande d'une longueur approximative de 3 m. Ces convoyeurs sont actionnés par des moyens moteurs 48, 49, 50 connus en eux-mêmes et disposent donc les colis dans le sens transversal ou le sens longitudinal. A la sortie du convoyeur 23, les charges sont reprises par la table 6 et orientées avec le système 26. La fonction de ce sous ensemble est d'assurer une orientation unique suivant le grand côté longueur par exemple à toutes les charges.

Pour ce faire, sont prévues trois opérations élémentaires, à savoir la mesure de la longueur de l'objet, la comparaison de cette mesure avec une donnée théorique mémorisée dans la mémoire de l'automate 29 et le retournement de la charge le cas échéant par l'intermédiaire d'un vérin pousseur (non représenté).

La mesure de la longueur de la charge est par exemple réalisée de la manière suivante :
la charge 4 entre sur le convoyeur 6 et active la cellule photoélectrique formant le capteur optique 28.
le système de pilotage (automate 29) mémorise alors la position de la charge 4 donnée par ledit capteur 28.

Dès que la charge n'occulte, plus la cellule photoélectrique, l'automate 29 mémorise à nouveau la position de la charge 4.

La longueur de la charge est alors obtenue par simple soustraction des deux valeurs précédemment mémorisées.

La valeur obtenue est ensuite comparée à la valeur théorique attendue. Si la différence est non nulle (à une tolérance près) on fait alors subir à la charge un retournement.

En effet le suivi en temps réel de la position de la charge sur le convoyeur 22 permet s'il y a lieu d'exercer une force à un point précis de ladite charge (en l'occurrence son premier coin) par un actionneur mécanique.

On a représenté sur les figures 6A, 6B et 6C les angles α pouvant exister entre les directions 10 et 12, entre un premier ensemble convoyeur et un deuxième ensemble convoyeur et/ou un deuxième ensemble et un troisième ensemble convoyeur (et/ou entre un n-1 ensemble et n ensemble ...).

La figure 6A illustre un angle α₁ de 120°, la figure 6B un angle α₂ de 90° et la figure 6C un angle rentrant α₃ pour aller jusqu'à 30.

Ces angles vont permettre de déterminer les vitesses que l'on veut choisir en fonction des distances et du nombre de colis déposés sur les tapis.

On a par ailleurs représenté par des ronds 60, 61 ; 60', 61' ; 60", 61" les portions de deux colis amenés à suivre deux trajets parallèles matérialisés par des droites formant donc les angles α₁, α₂ et α₃.

En fonction des distances δ entre ces deux trajectoires, des vitesses respectives V_{y} et Vₓ des parties d'angles des premier et deuxième ensembles convoyeurs et de l'angle, il est facile de déterminer par les simples règles de calcul trigonométriques les paramètres de fonctionnement pour un égrainage optimisé.

On a représenté sur les figures 7A, 7B, 7C un exemple de déplacement de colis. Les colis 70, 70', 70", 70"', ... sont alignés traversalement sur la figure 7A. Ils commencent à se désaligner sur la figure 7B au fur et à mesure qu'ils arrivent sur le deuxième ensemble convoyeur. Enfin sur la figure 7C on les voit sensiblement alignés ce qui a donc permis de les séparer et ensuite permet de les saisir dans la suite du procédé.

Comme il va de soi et comme il résulte également de ce qui précède, la présente invention n'est pas limitée aux modes de réalisation plus particulièrement décrits. Elle en embrasse au contraire toutes les variantes et notamment celles où d'autres rampes de guidage fixe ou mobile sont positionnées par exemple sur le deuxième ensemble convoyeur, et/ou les rampes de guidage ne sont pas motorisées.

## Revendications

1. Procédé de transfert et de présentation en file longitudinale ou sensiblement longitudinale dans le sens de leur transfert, de colis à un poste de reprise, dans lequel on dépose les colis par couche horizontale, chaque couche comprenant au moins un rang de colis transversal au sens de transfert, sur un premier ensemble convoyeur de réception véhiculant les colis ensemble dans une première direction ou sensiblement dans une première direction, dans lequel on fait avancer ensuite ces colis sans rupture de charge sur un deuxième ensemble convoyeur pour transfert selon une deuxième direction formant un angle avec la première direction, de sorte que la différence de longueur de trajet des colis initialement situés dans le sens transversal de la première direction permet l'égrainage des colis en file longitudinale ou sensiblement longitudinale, **caractérisé en ce que** le premier ensemble convoyeur comprend au moins une partie agencée pour transférer les colis séparément dans des premières directions divergentes chaque direction correspondant à chaque colis ou à un nombre déterminé de colis, et/ou à des premières vitesses différentes.

2. Procédé selon la revendication 1, **caractérisé en ce que** l'angle est compris entre 30° et 150°.

3. Procédé selon la revendication 2, **caractérisé en ce que** l'angle est inférieur à 90°.

4. Procédé selon la revendication 2, **caractérisé en ce que** l'angle est supérieur ou égal à 90°.

5. Procédé selon l'une quelconque des revendications précédentes, **caractérisé en ce que** la première et/ou la deuxième directions sont invariables.

6. Procédé selon l'une quelconque des revendications 1 à 4, **caractérisé en ce que** la première et/ou la deuxième directions sont au moins en partie variables.

7. Procédé selon l'une quelconque des revendications précédentes, **caractérisé en ce que**, la couche comprenant au moins deux rangs, on fait avancer les colis à partir d'une première partie du premier ensemble convoyeur animé d'une première vitesse V sur une deuxième partie intermédiaire située avant le deuxième ensemble convoyeur, ladite deuxième partie intermédiaire étant animée d'une vitesse déterminée V' supérieure à ladite première vitesse, de sorte que la différence de vitesses entraine la séparation des rangs successifs entre eux avant le transfert sur le deuxième ensemble convoyeur.

8. Procédé selon la revendication 7, **caractérisé en ce qu'**on fait avancer le deuxième rang sur le deuxième ensemble convoyeur que lorsque l'ensemble des colis du rang précédent a atteint une certaine distance par rapport à l'entrée sur ledit deuxième convoyeur, pour éviter tout risque de télescopage entre colis de deux rangs différents.

9. Procédé selon l'une quelconque des revendications précédentes, **caractérisé en ce que** on fait avancer les colis sur au moins un troisième ensemble convoyeur de transfert, dans une troisième direction ou sensiblement dans une troisième direction formant un deuxième angle avec la deuxième direction du deuxième ensemble convoyeur.

10. Procédé selon la revendication 9, caractérisé en ce le premier angle et le deuxième angle sont égaux à 90°.

11. Procédé selon l'une quelconque des revendications précédentes, **caractérisé en ce que** on redresse chaque colis par rapport à un plan horizontal déterminé dans une position identique de préhension par au moins une rampe de guidage motorisée, en biais par rapport au sens de transfert selon un angle aigu β par rapport à l'une des rives (44) du convoyeur et on actionne un système de pivotement si nécessaire, pour placer les colis toujours dans le même sens par rapport à leur axe longitudinal.

12. Dispositif de transfert et de présentation de colis en file longitudinale ou sensiblement longitudinale dans le sens de leur transfert à un poste de reprise des colis, dans lequel on dépose les colis par couche, chaque couche comprenant au moins un rang transversal au sens de transfert, ledit dispositif comprenant un premier ensemble convoyeur de réception véhiculant les colis dans une première direction ou sensiblement dans une première direction, un deuxième ensemble convoyeur pour transfert des colis sans rupture de charge selon une deuxième direction formant un angle avec la première direction, de sorte que la différence de longueur de trajet des colis initialement situés dans le sens transversal de la première direction permet l'égrainage des colis en file longitudinale ou sensiblement longitudinale du fait de cet angle, **caractérisé en ce que** le premier ensemble convoyeur comprend au moins une partie agencée pour transférer les colis séparément dans des premières directions divergentes, chaque direction correspondant à chaque colis ou à plusieurs colis, et/ou à des premières vitesses différentes.

13. Dispositif selon la revendication 12, **caractérisé en ce que** l'angle est compris entre 30° et 150°.

14. Dispositif selon la revendication 13, **caractérisé en ce que** l'angle est inférieur à 90°.

15. Dispositif selon l'une quelconque des revendications 12 à 14, **caractérisé en ce que** la première et/ou la deuxième directions sont invariables.

16. Dispositif selon l'une quelconque des revendications 12 à 14, **caractérisé en ce que** la première direction et/ou la deuxième directions sont au moins en partie variables.

17. Dispositif selon l'une quelconque des revendications 12 à 16 **caractérisé en ce que**, la couche comprenant au moins deux rangs, le premier ensemble convoyeur comprend une deuxième partie intermédiaire située avant le deuxième ensemble convoyeur, ladite deuxième partie intermédiaire étant agencée pour être animée d'une vitesse déterminée supérieure à la ou aux vitesses d'une première partie du premier ensemble convoyeur, de sorte que la différence de vitesses entraine la séparation des rangs successifs entre eux avant le transfert sur le deuxième ensemble convoyeur.

18. Dispositif selon l'une quelconque des revendications 12 à 17, **caractérisé en ce qu'**il comprend un troisième ensemble convoyeur de transfert selon ledit plan horizontal déterminé, dans une troisième direction ou sensiblement dans une troisième direction formant un deuxième angle avec la deuxième direction du deuxième ensemble convoyeur.

19. Dispositif selon l'une quelconque des revendications 12 à 18, **caractérisé en ce que** il comprend au moins une rampe motorisée en biais par rapport au sens de transfert, de guidage des colis, et des moyens d'actionnement d'un système de pivotement pour placer les colis toujours dans le même sens par rapport à leur axe horizontal.
